(19) Europäisches Patentamt
European Patent Office
Office européen des brevets

(11) **EP 2 566 167 A1**

(12) **EUROPEAN PATENT APPLICATION**
published in accordance with Art. 153(4) EPC

(43) Date of publication:
06.03.2013 Bulletin 2013/10

(21) Application number: 11806681.0

(22) Date of filing: 07.07.2011

(51) Int Cl.:
*H04N 13/02* (2006.01)    *H04N 7/32* (2006.01)

(86) International application number:
PCT/JP2011/065560

(87) International publication number:
WO 2012/008351 (19.01.2012 Gazette 2012/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.07.2010 JP 2010161304

(71) Applicant: Sony Corporation
Tokyo 108-0075 (JP)

(72) Inventors:
• TAKAHASHI, Yoshitomo
Tokyo 108-0075 (JP)

• SUZUKI, Teruhiko
Tokyo 108-0075 (JP)
• KITAMURA, Takuya
Tokyo 108-0075 (JP)

(74) Representative: Ealey, Douglas Ralph et al
D Young & Co LLP
120 Holborn
London EC1N 2DY (GB)

(54) **IMAGE PROCESSING DEVICE AND IMAGE PROCESSING METHOD**

(57) Encoding efficiency in multi-view image encoding is to be increased. A feature amount generation unit (41) generates a feature amount indicating the correlation between images of different viewpoints. Based on the generated feature amount, a reference index assignment unit (45) assigns reference indexes to a reference picture of a parallax prediction that uses the correlation between images of different viewpoints, and to a reference picture of a temporal prediction that uses the correlation between images in the temporal direction. In a case where the correlation is determined to be lower than a predetermined threshold value based on the feature amount, for example, the reference index assignment is changed, and the reference index assigned to a reference picture of a parallax prediction is re-assigned to a reference picture of a temporal prediction.

*FIG. 3*

EP 2 566 167 A1

**Description**

TECHNICAL FIELD

The present invention relates to an image processing device and an image processing method. Particularly, the present invention aims to improve the encoding efficiency in multi-view image encoding.

BACKGROUND ART

In recent years, apparatuses that handle image information as digital information and achieve high-efficiency information transmission and accumulation in doing so, or apparatuses compliant with a standard such as MPEG for compression through orthogonal transforms like discrete cosine transforms and motion compensations, have been spreading among broadcast stations and general households.

Particularly, MPEG2 (ISO/IEC 13818-2) is defined as a general-purpose image encoding technique, and is currently used for a wide range of applications for professionals and general consumers. Further, H.264 and MPEG-4 Part 10 (hereinafter referred to as "H. 264/AVC (Advanced Video Coding)"), which can achieve a higher encoding efficiency than encoding techniques such as MPEG2, have become standards, though requiring a larger amount of calculation for encoding and decoding.

By such image encoding techniques, the amount of information is made smaller by reducing redundancy in the temporal and spatial directions. For an I-picture on which in-picture predictive encoding is performed so as to reduce spatial redundancy, a predicted image is generated by using the correlation between pixels, for example. For a P-picture on which in-picture predictive encoding is performed so as to reduce temporal redundancy, motion vectors are detected on a block basis by referring to a previous image, and a predicted image is generated by using the detected motion vectors. As for a B-picture, motion vectors are detected on a block basis by referring to previous and subsequent pictures, and a predicted image is generated by using the detected motion vectors. In the B-picture, the first reference picture is called a reference picture of an L0 prediction, and the second reference picture is called a reference picture of an L1 prediction.

According to H.264/AVC, reference pictures can be selected from already encoded pictures. The selected reference pictures are managed by reference indexes. A reference index is used as the information indicating to which picture is referred when motion vectors are detected, and the reference index is encoded together with the information indicating the detected motion vectors.

A reference index is set to a value of 0 or greater. The smaller the value of the reference index, the smaller the amount of information after encoding (the coding amount). Further, reference indexes can be arbitrarily assigned to reference pictures. Therefore, a reference index with a smaller number is assigned to a reference picture with a large number of motion vectors to be referred to. By doing so, the coding amount at the time of reference index encoding is reduced, and the encoding efficiency can be increased.

Patent Document 1 discloses a technique by which a reference index with a small value is assigned to a reference picture that is close to the picture being encoded in terms of time, when field encoding is performed on a 2D image of an interlaced scan type.

CITATION LIST

PATENT DOCUMENT

Patent Document 1: Japanese Patent Application Laid-Open No. 2010-63092

SUMMARY OF THE INVENTION

PROBLEMS TO BE SOLVED BY THE INVENTION

Meanwhile, in frame sequential (FS)-AVC or multiview video coding (MVC), not only a temporal prediction that uses the correlation between images in the temporal direction, but also a parallax prediction that uses the correlation between images of different viewpoints is performed.

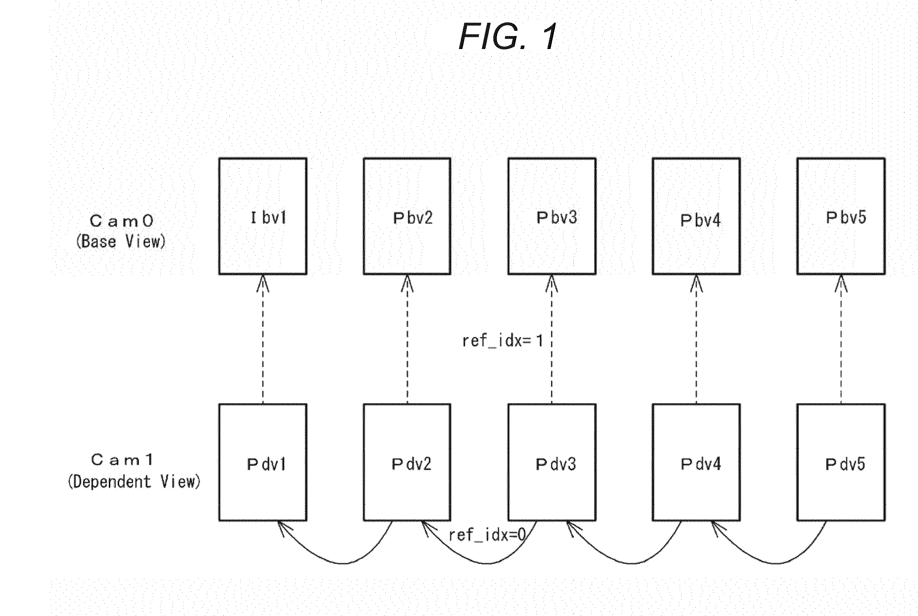

Fig. 1 shows a conventional reference index assignment method, or a method of assigning reference indexes when moving image data of two viewpoints are encoded by MVC, for example. It should be noted that Cam0 represents the image data of a left-eye image, and Cam1 represents the image data of a right-eye image. The image data of Cam1 is the image data of a dependent view to be encoded by using the image data of Cam0 as the image data of a reference picture. The image data of Cam0 to be referred to when the image data of the dependent view is encoded is the image data of a base view.

The P-pictures of Cam1 to be referred to in a temporal prediction as indicated by the solid arrows, and the I-picture and P-pictures of Cam0 to be referred to in a parallax prediction as indicated by dotted arrows serve as the reference pictures for the P-pictures in the image data of Cam1. The reference pictures are managed by the numbers each shown as reference index ref_idx, and a value of 0 or greater is assigned to each of the reference pictures. For example, a reference index ref_idx = 0 is assigned to a temporal prediction reference picture, and a reference index ref_idx = 1 is assigned to a parallax prediction reference picture.

In a case where the correlation between images of different viewpoints becomes dramatically lower, only the same effects as those in a case where a single image is referred to are substantially achieved, even if reference indexes are assigned to reference pictures as shown in Fig. 1 so that more than one image can be referred to. That is, when the correlation between a left-eye image and a right-eye image is extremely low, a prediction using images of different viewpoints is inefficient. Therefore, parallax predictions using the reference index ref_idx = 1 are ineffective. As a result, only the temporal predictions using the reference index ref_idx = 0 are performed, and substantially the same effects as those in a case where a single image is referred to are obtained.

In view of this, the present invention aims to provide an image processing device and an image processing method that can increase the encoding efficiency in multi-view image encoding.

SOLUTIONS TO PROBLEMS

A first aspect of the present invention is an image processing device that includes: a feature amount generation unit that generates a feature amount indicating the correlation between images of different viewpoints; and a reference index assignment unit that re-assigns a reference index assigned to a reference picture of a parallax prediction using the correlation between the images of different viewpoints, to a reference picture of a temporal prediction using the correlation between images in a temporal direction, when the correlation between the images of different viewpoints is determined to be lower than a predetermined threshold value based on the feature amount generated by the feature amount generation unit.

In the present invention, a feature amount indicating the correlation between images of different viewpoints is generated by the feature amount generation unit. For example, in an operation to encode the first picture in a GOP, at least one of the total sum of the differences between blocks being encoded and a reference block in the image when parallax vectors are detected, the proportion of intra macroblocks in the image, and the image complexity ratio between the picture being encoded and a reference picture of a different viewpoint, is calculated as the feature amount. Based on the feature amount, reference indexes are assigned to a reference picture of a parallax prediction using the correlation between images of different viewpoints, and to a reference picture of a temporal prediction using the correlation between images in the temporal direction. In a case where the correlation is determined to be lower than a predetermined threshold value, for example, the reference index assignment is changed, and the reference index assigned to the reference picture of the parallax prediction is re-assigned to the reference picture of the temporal prediction. Also, in a case where the correlation is determined to be lower than the predetermined threshold value, a change is made to the GOP structure, to turn a non-reference picture that is closer in the temporal direction, into a reference picture.

A second aspect of the present invention is an image processing method that includes: a feature amount generation step of generating a feature amount indicating the correlation between images of different viewpoints; and a reference index assignment step of re-assigning a reference index assigned to a reference picture of a parallax prediction using the correlation between the images of different viewpoints, to a reference picture of a temporal prediction using the correlation between images in a temporal direction, when the correlation between the images of different viewpoints is determined to be lower than a predetermined threshold value based on the feature amount generated in the feature amount generation step.

EFFECTS OF THE INVENTION

According to the present invention, a feature amount indicating the correlation between images of different viewpoints is generated. When the correlation is determined to be lower than a predetermined threshold value based on the feature amount, the reference index assigned to a reference picture of a parallax prediction using the correlation between the images of different viewpoints is re-assigned to a reference picture of a temporal prediction using the correlation between images in the temporal direction. Accordingly, the encoding efficiency in a case where the correlation between images of different viewpoints is low can be increased in multi-view image encoding.

BRIEF DESCRIPTION OF DRAWINGS

Fig. 1 is a diagram for explaining a conventional reference index assignment method;
Fig. 2 is a diagram showing an example structure of an encoding system;
Fig. 3 is a diagram showing the structure of an image processing device;
Fig. 4 is a flowchart showing an operation of an image processing device;
Fig. 5 is a diagram illustrating a reference index assignment method implemented where the correlation is low;
Figs. 6(A) and 6(B) are diagrams illustrating a reference index assignment method implemented in a case where B-pictures are contained;
Figs. 7(A), 7(B), and 7(C) are diagrams for explaining an operation performed in a case where a change is made to a GOP structure; and
Fig. 8 is a diagram showing the structure of a computer device.

MODES FOR CARRYING OUT THE INVENTION

The following is a description of embodiments for carrying out the invention. Explanation will be made in the following order.

1. Example structure of an encoding system
2. Example structure of an image processing device
3. Reference index assigning operation
4. Structure used in a case where image encoding is performed through a software operation

<1. Example structure of an encoding system>

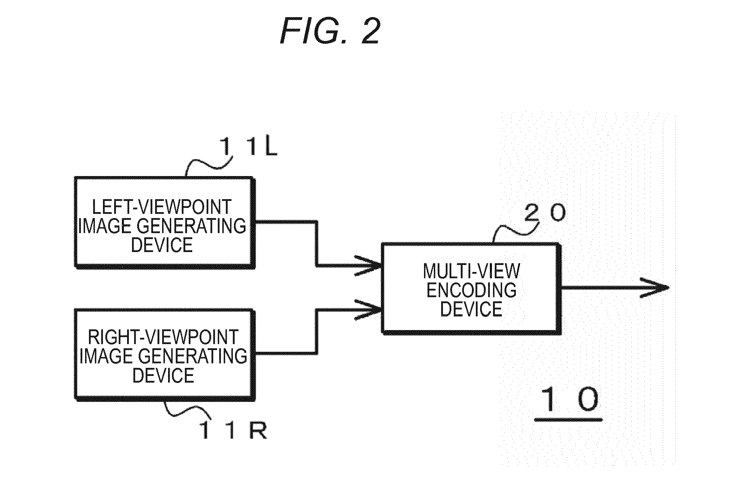

Fig. 2 is a diagram showing an example structure of an encoding system to which the present invention is applied. The encoding system 10 includes a left-viewpoint image generating device 11L, a right-viewpoint image generating device 11R, and a multi-view encoding device 20.

The left-viewpoint image generating device 11L is an imaging device or an image data generating device that generates image data of a left-eye image. The right-viewpoint image generating device 11R is an imaging device or an image data generating device that generates image data of a right-eye image. The left-viewpoint image generating device 11L and the right-viewpoint image generating device 11R operate in synchronization with each other.

The image data of the left-eye image generated by the left-viewpoint image generating device 11L and the image data of the right-eye image generated by the right-viewpoint image generating device 11R are input to the multi-view encoding device 20. The multi-view encoding device 20 encodes the image data of the left-eye image and encodes the image data of the right-eye image, multiplexes the resultant encoded data, and outputs the resultant data as a bit stream.

The multi-view encoding device 20 includes an image processing device that encodes the image data of the left-eye image input from the left-viewpoint image generating device 11L as image data of a base view, for example. The multi-view encoding device 20 also includes an image processing device of the present invention that encodes the image data of the right-eye image input from the right-viewpoint image generating device 11R as image data of a dependent view, for example. The image data of the base view is used in temporal predictions that do not use images of other viewpoints as reference pictures, and the image data of the dependent view is used in temporal predictions and parallax predictions that use the image of the base view as a reference picture.

<2. Example structure of an image processing device>

Next, the image processing device of the present invention is described. In the image processing device of the present invention, the image data of a left-eye image and the image data of a right-eye image are independent of each other. The image processing device that encodes the image data of a dependent view obtains the image data of a reference picture to be used in a parallax prediction and the like, from the image processing device that encodes the image data of a base view.

The image processing device that encodes the image data of a dependent view generates a feature amount that depends on the correlation between pictures of different viewpoints, or between an image of a dependent view and an image of a base view to be used as a reference picture. Further, based on the generated feature amount, reference indexes are assigned to the reference picture of a parallax prediction that uses the correlation between images of different viewpoints and to the reference picture of a temporal prediction that uses the correlation between images in the temporal direction.

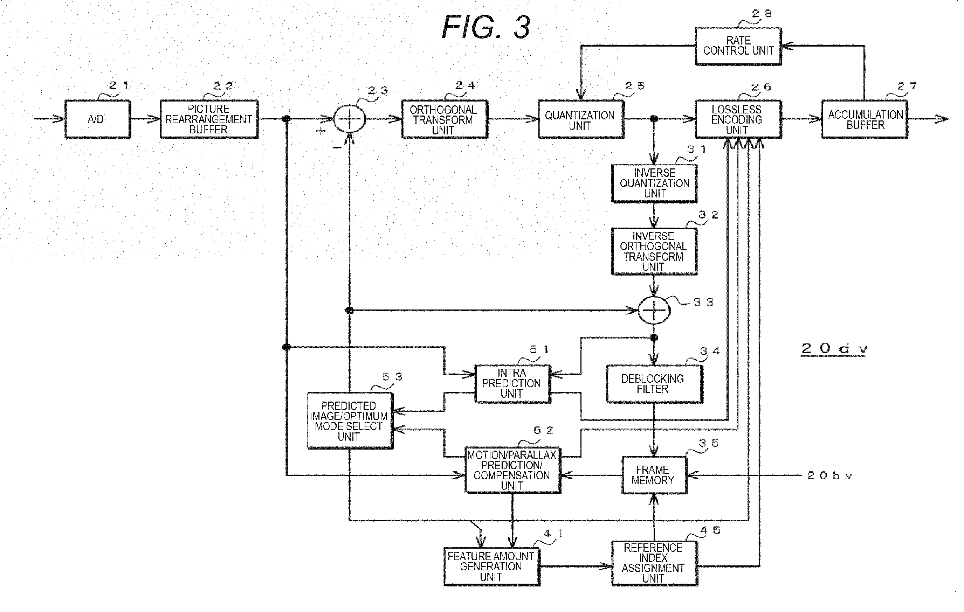

Fig. 3 shows the structure of an image encoding device 20dv that is an image processing device that encodes image data of a dependent view. The image encoding device 20dv includes an analog/digital conversion unit (A/D conversion unit) 21, a picture rearrangement buffer 22, a subtraction unit 23, an orthogonal transform unit 24, a quantization unit 25, a lossless encoding unit 26, an accumulation buffer 27, and a rate control unit 28. The image encoding device 20dv also includes an inverse quantization unit 31, an inverse orthogonal transform unit 32, an addition unit 33, a deblocking filter 34, and a frame memory 35. Further, the image encoding device 20dv includes a reference index assignment unit 45, an intra prediction unit 51, a motion/parallax prediction/compensation unit 52, and a predicted image/optimum mode select unit 53.

The A/D conversion unit 21 converts analog image signals into digital image data, and outputs the image data to the picture rearrangement buffer 22.

The picture rearrangement buffer 22 rearranges the frames of the image data output from the A/D conversion unit 21. The picture rearrangement buffer 22 rearranges the frames in accordance with the GOP (Group of Pictures) structure related to the encoding operation, and outputs the rearranged image data to the subtraction unit 23, the intra prediction unit 51, and the motion/parallax prediction/compensation unit 52.

The subtraction unit 23 receives the image data output from the picture rearrangement buffer 22 and predicted image data selected by the later described predicted image/optimum mode select unit 53. The subtraction unit 23 calculates prediction error data that is the difference between the image data output from the picture rearrangement buffer 22 and the predicted image data supplied from the predicted image/optimum mode select unit 53, and outputs the prediction error data to the orthogonal transform unit 24.

The orthogonal transform unit 24 performs an orthogonal transform operation, such as a discrete cosine transform (DCT) or a Karhunen-Loeve transform, on the prediction error data output from the subtraction unit 23. The orthogonal transform unit 24 outputs coefficient data obtained by performing the orthogonal transform operation to the quantization unit 25.

The quantization unit 25 receives the coefficient data output from the orthogonal transform unit 24 and a rate control signal supplied from the later described rate control unit 28. The quantization unit 25 quantizes the coefficient data, and outputs the quantized data to the lossless encoding unit 26 and the inverse quantization unit 31. Based on the rate control signal supplied from the rate control unit 28, the quantization unit 25 switches quantization parameters (quantization scales), to change the bit rate of the quantized data.

The lossless encoding unit 26 receives the quantized data output from the quantization unit 25, and prediction mode information supplied from the later described intra prediction unit 51, the motion/parallax prediction/compensation unit 52, and the predicted image/optimum mode select unit 53. The prediction mode information contains a macroblock type indicating the block size of the picture being encoded, a prediction mode, a reference index, and the like. The lossless encoding unit 26 performs an encoding operation on the quantized data through variable-length coding or arithmetic coding or the like, to generate and output an encoded stream to the accumulation buffer 27. The lossless encoding unit 26 also performs lossless coding on the prediction mode information, and adds the resultant information to the header information in the encoded stream, for example.

The accumulation buffer 27 stores the encoded stream supplied from the lossless encoding unit 26. The accumulation buffer 27 also outputs the stored encoded stream at a transmission rate in accordance with the transmission path.

The rate control unit 28 monitors the free space in the accumulation buffer 27, generates a rate control signal in accordance with the free space, and outputs the rate control signal to the quantization unit 25. The rate control unit 28 obtains information about the free space from the accumulation buffer 27, for example. When the remaining free space is small, the rate control unit 28 lowers the bit rate of the quantized data through the rate control signal. When the remaining free space in the accumulation buffer 27 is sufficiently large, the rate control unit 28 increases the bit rate of the quantized data through the rate control signal.

The inverse quantization unit 31 inversely quantizes the quantized data supplied from the quantization unit 25. The inverse quantization unit 31 outputs the coefficient data obtained by performing the inverse quantization operation to the inverse orthogonal transform unit 32.

The inverse orthogonal transform unit 32 performs an inverse orthogonal transform operation on the coefficient data supplied from the inverse quantization unit 31, and outputs the resultant data to the addition unit 33.

The addition unit 33 adds the data supplied from the inverse orthogonal transform unit 32 to the predicted image data supplied from predicted image/optimum mode select unit 53, to generate image data of a reference picture. The addition unit 33 outputs the image data to the deblocking filter 34 and the intra prediction unit 51.

The deblocking filter 34 performs a filtering operation to reduce block distortions that occur at the time of image encoding. The deblocking filter 34 performs a filtering operation to remove block distortions from the image data supplied from the addition unit 33, and outputs the filtered image data to the frame memory 35.

The frame memory 35 stores the filtered image data supplied from the deblocking filter 34, and the reference picture image data supplied from an image encoding device 20bv that encodes a base view.

A feature amount generation unit 41 generates a feature amount. In a case where the image data of a dependent view is encoded, the feature amount is the information for determining whether the correlation between images of different viewpoints is low. The feature amount generation unit 41 generates the feature amount from the information obtained in the operation to encode the first picture in the GOP, for example. The feature amount generation unit 41 uses, as the feature amount, the total sum (such as SAD: Sum of Absolute Differences) of differences between the blocks of pictures being encoded (blocks being encoded) and the block of the reference picture (the reference block) in the image when parallax vectors are detected, for example. The feature amount generation unit 41 may also use, as the feature amount, the proportion of intra macroblocks in the image, or the complexity ratio between the picture being encoded and an image of a reference picture of a different viewpoint, or the like.

In a case where the differences between the blocks being encoded and the reference block are used as the feature amount, the feature amount generation unit 41 calculates the total sum of the differences calculated by the later described motion/parallax prediction/compensation unit 52 in the image, and sets the total sum as the feature amount.

In a case where the proportion of the intra macroblocks is used as the feature amount, the feature amount generation unit 41 calculates the proportion of macroblocks determined to have an intra prediction as an optimum mode in a parallax prediction by the later described predicted image/optimum mode select unit 53 in an image, and sets the calculated proportion as the feature amount.

In a case where the complexity ratio of an encoded picture is used as the feature amount, the feature amount generation unit 41 calculates the complexity of the encoded first picture in the GOP, and sets the calculated complexity ratio as the feature amount. That is, the feature amount generation unit 41 calculates the complexities $X_i$ and $X_p$ of an I-picture (Ibv1) and a P-picture (Pdv1) according to the equations (1) and (2), and sets the ratio between the calculated complexities ($X_i/X_p$) as the feature amount:

$$Xi = SiQi \qquad \ldots \text{(1)}$$

$$Xp = SpQp \qquad \ldots \text{(2)}$$

In the equation (1), Xi represents the complexity of the I-picture, Si represents the generated coding amount of the I-picture, and Qi represents the mean quantization scale code (a quantization parameter) used at the time of I-picture encoding. Likewise, in the equation (2), Xp represents the complexity of the P-picture, Sp represents the generated coding amount of the P-picture, and Qp represents the mean quantization scale code (a quantization parameter) used at the time of P-picture encoding.

As described above, the feature amount generation unit 41 outputs a feature amount to the reference index assignment unit 45, the feature amount being at least one of the total sum of the differences between the blocks being encoded and the reference block in the image, the proportion of intra macroblocks in the image, and the complexity ratio between the picture being encoded and the image of a reference picture of a different viewpoint.

Based on the feature amount generated by the feature amount generation unit 41, the reference index assignment unit 45 determines a reference index assignment method for the reference picture of the parallax prediction and the reference picture of the temporal prediction. For example, in a case where the feature amount is generated from the information obtained in the operation to encode the first picture in the GOP, the reference index assignment unit 45 determines the reference index assignment method for the subsequent pictures (the pictures other than the first picture) in the GOP. By the determined assignment method, the reference index assignment unit 45 assigns reference indexes to the reference pictures stored in the frame memory 35.

In a case where the total sum of the differences between the blocks being encoded and the reference block is generated as the feature amount, the reference index assignment unit 45 determines the correlation to be low when the total sum is larger than a predetermined threshold value. In a case where the proportion of intra macroblocks is generated as the feature amount, the reference index assignment unit 45 determines the correlation to be low when the proportion is larger than a predetermined threshold value. In a case where the complexity ratio is generated as the feature amount, the reference index assignment unit 45 determines the correlation to be low when the complexity ratio (Xi/Xp) is lower than a predetermined threshold value.

When determining the correlation to be lower than a predetermined threshold value, the reference index assignment unit 45 changes the reference index assignment, and re-assigns the reference index assigned to the parallax prediction reference picture, to the temporal prediction reference picture.

The intra prediction unit 51 performs intra prediction operations in all candidate intra prediction modes, using the image data of the picture being encoded output from the picture rearrangement buffer 22 and the image data supplied from the addition unit 33. The intra prediction unit 51 further calculates a cost function value in each of the intra prediction modes, and selects an optimum intra prediction mode that is the intra prediction mode with the smallest cost function value calculated or the intra prediction mode with the highest encoding efficiency. The intra prediction unit 51 outputs the predicted image data generated in the optimum intra prediction mode, the prediction mode information about the optimum intra prediction mode, and the cost function value in the optimum intra prediction mode, to the predicted image/optimum mode select unit 53. The intra prediction unit 51 also outputs the prediction mode information about the intra prediction mode in the intra prediction operation in each intra prediction mode to the lossless encoding unit 26, so as to obtain the generated coding amount used in the calculation of the cost function values. The cost function values can be calculated by a method called JM (Joint Model) installed in H.264/AVC reference software, for example.

The motion/parallax prediction/compensation unit 52 performs a motion/parallax prediction/compensation operation for each block size of blocks being encoded. From each image of each block being encoded among images read out from the picture rearrangement buffer 22, the motion/parallax prediction/compensation unit 52 detects motion vectors by using image data that is read out from the frame memory 35 and has been subjected to a deblocking filtering operation, and detects parallax vectors by using the image data of a base view. Based on the detected vectors, the motion/parallax prediction/compensation unit 52 further performs a compensation operation on the reference picture, to generate a predicted image.

Also, the motion/parallax prediction/compensation unit 52 calculates a cost function value for each block size of pictures being encoded and each reference picture, and selects an optimum inter prediction mode that is the block size and the reference picture having the smallest cost function value. The motion/parallax prediction/compensation unit 52 outputs the predicted image data generated in the optimum inter prediction mode, the prediction mode information about the optimum inter prediction mode, and the cost function value in the optimum inter prediction mode, to the predicted image/optimum mode select unit 53. To obtain the generated coding amount used in the calculation of the cost function values, the motion/parallax prediction/compensation unit 52 also outputs the prediction mode information about the inter prediction mode to the lossless encoding unit 26 in the inter prediction operation with each block size. Further, in a case where the total sum of the differences between the blocks being encoded and the references block is generated as the feature amount by the feature amount generation unit 41, the motion/parallax prediction/compensation unit 52 calculates the difference between each block being encoded and the reference block when parallax vectors are detected, and outputs the difference to the feature amount generation unit 41.

The predicted image/optimum mode select unit 53 compares the cost function value supplied from the intra prediction unit 51 with the cost function value supplied from the motion/parallax prediction/compensation unit 52, and selects the mode with the smaller cost function value as the optimum mode with the highest encoding efficiency. The predicted image/optimum mode select unit 53 also outputs the predicted image data generated in the optimum mode to the subtraction unit 23 and the addition unit 33. The predicted image/optimum mode select unit 53 further outputs the prediction mode information (such as the macroblock type, the prediction mode, and the reference index) about the optimum mode to the lossless encoding unit 26. Further, in a case where the proportion of intra macroblocks is generated as the feature amount by the feature amount generation unit 41, the predicted image/optimum mode select unit 53 outputs the information about the macroblocks for which an intra prediction mode has been selected among the pictures being encoded, to the feature amount generation unit 41.

<3. Operation of the image processing device>

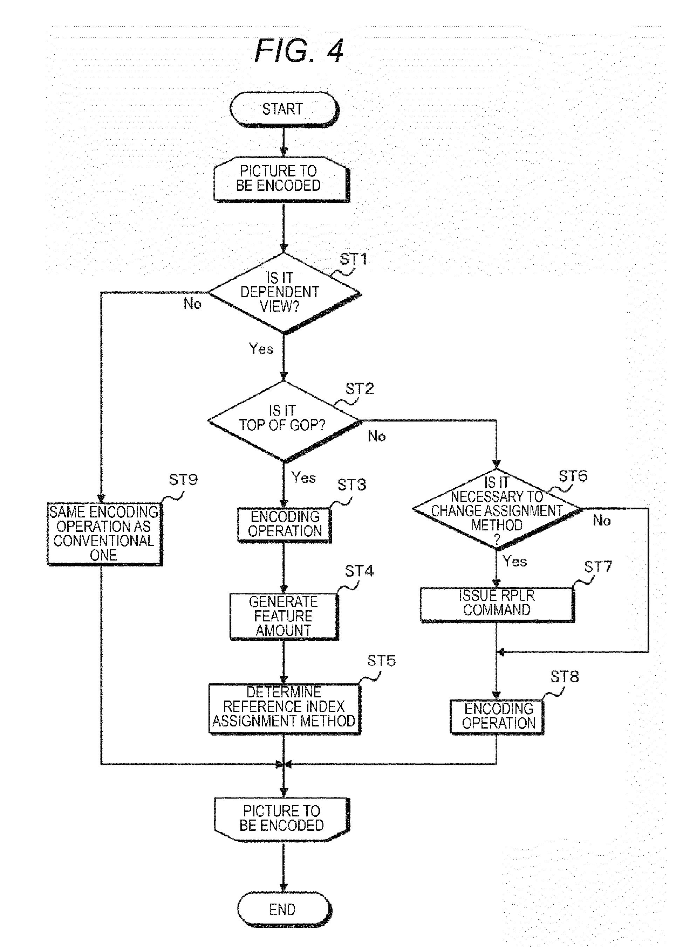

Fig. 4 is a flowchart showing an operation of the image encoding device 20dv. In step ST1, the image encoding device 20dv determines whether the picture being encoded is a picture of a dependent view. If the picture being encoded is a picture of a dependent view, the image encoding device 20dv moves on to step ST2. If the picture being encoded is a picture of a base view, the image encoding device 20dv moves on to step ST9.

In step ST2, the image encoding device 20dv determines whether the picture being encoded is the first picture in the GOP. If the picture being encoded is the first picture, the image encoding device 20dv moves on to step ST3. If the picture being encoded is a subsequent picture in the GOP, the image encoding device 20dv moves on to step ST6.

In step ST3, the image encoding device 20dv performs an encoding operation on the picture being encoded, and moves on to step ST4. In the encoding operation, the reference index assignment unit 45 sets reference indexes by a predetermined assignment method.

In step ST4, the image encoding device 20dv generates a feature amount. The feature amount generation unit 41 of the image encoding device 20dv generates the feature amount from the information obtained in the operation to encode the first picture, and moves on to step ST5. The feature amount generation unit 41 generates the feature amount that is the total sum of the differences between the blocks being encoded and the reference block in the image when parallax vectors are detected, the proportion of the intra macroblocks in the image, the complexity ratio of the image, or the like.

In step ST5, the image encoding device 20dv determines a reference index assignment method. Based on the feature amount generated in step ST4, the reference index assignment unit 45 of the image encoding device 20dv determines the reference index assignment method to be implemented in the operation to encode the subsequent pictures. When determining that the correlation between the pictures of the dependent view and the base view is low based on the feature amount, the reference index assignment unit 45 uses the assignment method to re-assign the reference index assigned to a parallax prediction, to another reference picture of a temporal prediction. In a case where the total sum of the differences between the blocks being encoded and the reference block in the image is generated as the feature amount, for example, the reference index assignment unit 45 determines the correlation to be low when the total sum is larger than a predetermined threshold value. In a case where the proportion of intra macroblocks in the image is generated as the feature amount, for example, the reference index assignment unit 45 determines the correlation to be low when the proportion is larger than a predetermined threshold value. In a case where the proportion of intra macroblocks in the image is generated as the feature amount, for example, the reference index assignment unit 45 determines the correlation to be low when the proportion is larger than a predetermined threshold value. Further, in a case where the complexity ratio is used as the feature amount, the reference index assignment unit 45 determines the correlation to be low when the complexity ratio is lower than a predetermined threshold value. When determining the correlation to be low, the reference index assignment unit 45 uses, for the subsequent pictures, the assignment method to re-assign the reference index assigned to a parallax prediction, to another reference picture of a temporal prediction.

When moving on to step ST6 after the picture being encoded is determined not to be the first picture in the GOP in step ST2, the image encoding device 20dv determines whether the assignment method needs to be changed. If the assignment method determined beforehand for the first picture in the GOP differs from the assignment method determined for the subsequent pictures in step ST5, the image encoding device 20dv moves on to step ST7. If those methods are the same, the image encoding device 20dv moves on to step ST8.

In step ST7, the image encoding device 20dv issues a RPLR (Reference Picture List Reordering) command. The reference index assignment unit 45 of the image encoding device 20dv issues the RPLR command so that correct reference pictures can be used in an image decoding device based on the reference indexes even if the reference index assignment to the subsequent pictures is changed. That is, the reference index assignment unit 45 supplies the RLPR, which is a syntax element, to the lossless encoding unit 26, and incorporates the RLPR into the header of the encoded stream of image data, for example. The operation then moves on to step ST8.

In step ST8, the image encoding device 20dv performs an encoding operation on the picture being encoded. In the encoding operation, the reference index assignment unit 45 also sets reference indexes by the assignment method determined for the subsequent pictures in step ST5.

When moving on to step ST9 after the picture being encoded is determined not to be a picture of a dependent view in step ST1, the image encoding device 20dv assigns reference indexes by the assignment method determined beforehand, and performs an encoding operation.

As this operation is performed for each picture being encoded, the reference index assigned to a reference picture of a parallax prediction is re-assigned to another reference picture of a temporal prediction when the correlation between the images of a dependent view and a base view is determined to be low based on the first picture in the GOP.

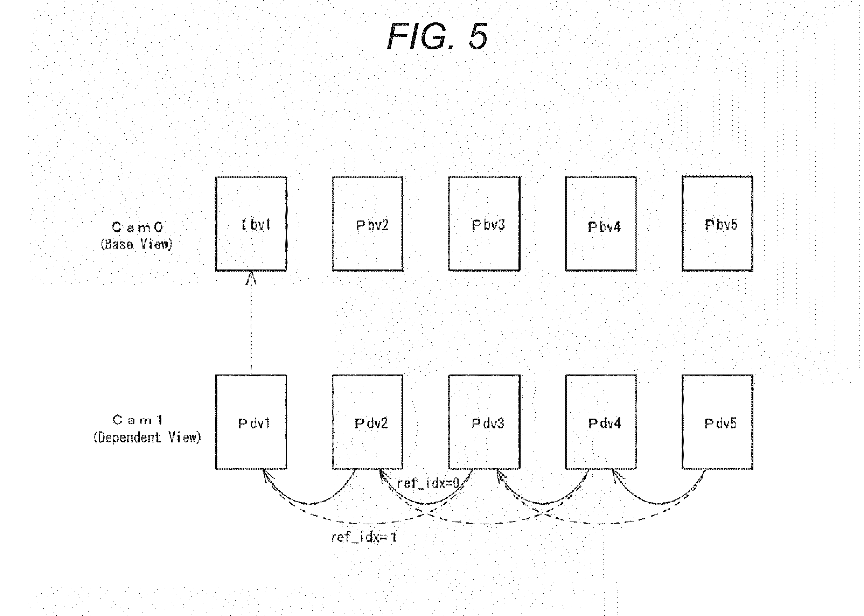

Fig. 5 illustrates a reference index assignment method to be implemented in a case where the correlation between images of a dependent view and a base view is low. In a case where the correlation between images of a dependent view and a base view is determined to be low based on the first picture, the reference index assignment method for the subsequent pictures in the GOP is changed. For example, a reference index ref_idx = 0 is assigned to the reference picture one frame before, and a reference index ref_idx = 1 is assigned to the reference picture two frames before. Therefore, in the case illustrated in Fig. 5, in an operation to encode a P-picture (Pdv3) in the image data of Cam1 (a dependent view), the reference index ref_idx = 1 assigned to a P-picture (Pbv3) in the image data of Cam0 (a base view) as a parallax prediction reference picture is re-assigned to a P-picture (Pdv1) of the dependent view.

As reference indexes are assigned to the parallax prediction reference picture and the temporal prediction reference picture based on the feature amount, the reference index assignment method is changed when the correlation between images is determined to be low, so that a base picture of a different viewpoint with a low degree of correlation is not used as a reference picture. Further, encoding can be performed by selecting a reference picture with high encoding efficiency from reference pictures in a temporal prediction. Accordingly, the encoding efficiency in multi-view image encoding can be increased.

In Fig. 5, the GOP of the dependent view is formed with I-pictures and P-pictures. However, in a GOP structure containing B-pictures, reference index assignment is also changed when the correlation is determined to be low.

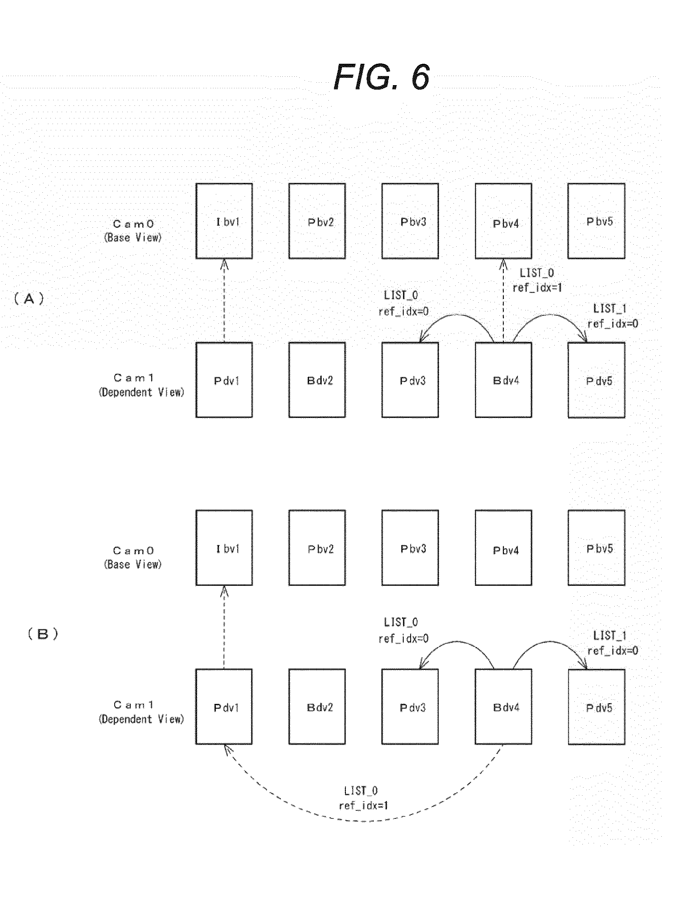

Figs. 6 illustrate a reference index assignment method to be implemented in a case where the GOP contains B-pictures. Fig. 6(A) illustrates a situation prior to assignment, and Fig. 6(B) illustrates a situation after the assignment.

A B-picture in the image data of Cam1 has a reference picture that is a P-picture of Cam1, which is referred to in an anterior prediction, or a Bs-picture in the image data of Cam0, which is referred to in a parallax prediction, in the L0 prediction (LIST_0). The B-picture has another reference picture that is a P-picture of Cam1, which is referred to in a posterior prediction in the L1 prediction (LIST_1), for example. Further, the pictures that can be used in LIST_X (X being 0 or 1) are managed by reference indexes ref_idx, as described above. Fig. 6 (A) illustrates an example case where a reference index ref_idx = 0 is assigned to temporal prediction reference pictures, and a reference index ref_idx = 1 is assigned to a parallax prediction reference picture.

When the correlation between images of a dependent view and a base view is determined to be low in the first picture in the GOP, the reference index assignment unit 45 re-assigns a reference index as shown in Fig. 6(B). In the operation to encode a B-picture (Bdv4), for example, the reference index assignment unit 45 re-assigns the reference index ref_idx = 1 assigned to the Bs-picture (Bsbv4), which is the parallax prediction reference picture, to a P-picture (Pdv1) of the dependent view.

As described above, when the correlation between the images of a dependent view and a base view is determined to be low in the first picture in the GOP, the reference index assignment method is changed, so that a base picture of a different viewpoint with a low degree of correlation is not used as a reference picture in the operation to encode a B-picture. Also, encoding can be performed by selecting a reference picture with a high encoding efficiency from reference pictures in a temporal prediction. Accordingly, the encoding efficiency in multi-view image encoding can be increased.

Also, in the above described embodiment, the correlation between the images of a dependent view and a base view is determined by using the first picture in the GOP. In a case where the total sum of the differences between the blocks being encoded and the reference block is used as the feature amount, however, a check can be made to determine whether the correlation between images is low even in the middle of the GOP. Accordingly, when the correlation between images is determined to be low based on the feature amount in the middle of the GOP, the reference index assignment method can be changed.

In the above described embodiment, the reference index assignment method is changed when the correlation between images is determined to be low. However, the GOP structure can also be changed, to increase the encoding efficiency in multi-view image encoding.

In a case where a reference index is re-assigned as shown in Fig. 6(B), the P-picture (Pdv1) of the dependent view is further away from the B-picture (Bdv4) in terms of time. Therefore, in a case where the correlation between images of a dependent view and a base view is determined to be low in the first picture in the GOP, the GOP structure is changed so that a reference index can be assigned to a non-reference picture that is closer to the picture being encoded in terms of time.

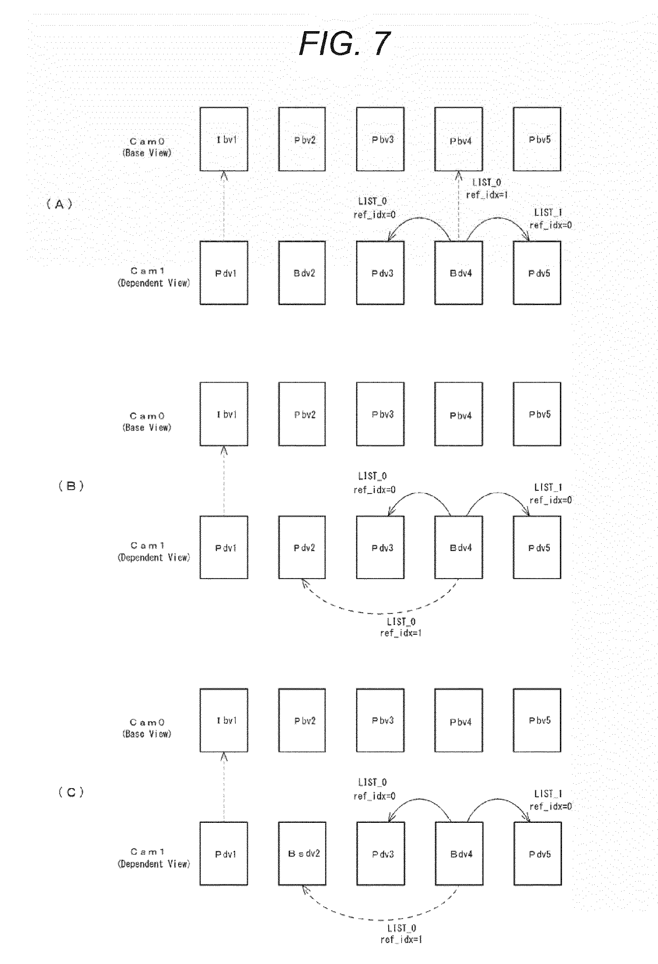

Figs. 7 illustrates a case where the GOP structure is changed. Fig. 7(A) illustrates a situation prior to assignment. Figs. 7(B) and 7(C) illustrate situations where changes are made to the assignment and the GOP structure.

Fig. 7(A) illustrates an example case where a reference index ref_idx = 0 is assigned to temporal prediction reference pictures, and a reference index ref_idx = 1 is assigned to a parallax prediction reference picture.

When the correlation between images of a dependent view and a base view is determined to be low in the first picture in the GOP, a change is made to the GOP picture to turn a B-picture (Bdv2), which is a non-reference picture, into a P-picture (Pdv2), as shown in Fig. 7(B). In the operation to encode a B-picture (Bdv4) in this case, the reference index ref_idx = 1 assigned to the Bs-picture (Bsbv4), which is a parallax prediction reference picture, can be re-assigned to a P-picture (Pdv2), which is closer than in the case of Fig. 6(B) in terms of time. Although a B-picture (Bdv2) is changed to a P-picture (Pdv2) in Fig. 7(B), all the B-pictures in the GOP may be changed to P-pictures.

When the correlation between images of a dependent view and a base view is determined to be low in the first picture in the GOP, a change can also be made to the GOP picture to turn a B-picture (Bdv2), which is a non-reference picture, into a Bs-picture (Bsdv2), as shown in Fig. 7(C). In the operation to encode the B-picture (Bdv4) in this case, the reference index ref_idx = 1 assigned to the Bs-picture (Bsbv4), which is a parallax prediction reference picture, can be re-assigned to the Bs-picture (Bsdv2), which is closer than in the case of Fig. 6(B) in terms of time.

In this manner, when the correlation between images of a dependent view and a base view is determined to be low in the first picture of the GOP, a change is made to the GOP structure, and a reference index is assigned to a picture that is closer in the temporal direction. That is, a B-picture that is closer in the temporal direction is turned into a P-picture or a Bs-picture, so that the P-picture or the Bs-picture can be referred to from the picture being encoded. As a change is made to the GOP structure in this manner, encoding can be performed by using a reference picture that is a picture closer in the temporal direction. Accordingly, the prediction accuracy can be made higher than in a case where the GOP structure is not changed. Thus, the encoding efficiency in multi-view image encoding can be increased.

In a case where image data of FS-AVC, by which images of different viewpoints are switched by the frame, for example, the feature amount generation unit 41 generates the feature amount by using image data of another viewpoint extracted from input image data. The image data of another viewpoint extracted from the input image data, and the image data of a reference picture generated by encoding the image data of another viewpoint are also stored in the frame memory 35. Through such an operation, FS-AVC image data can also be encoded.

<4. Structure used in a case where image encoding is performed through a software operation>

Further, the image processing device may be a computer device that performs the above described series of operations in accordance with a program.

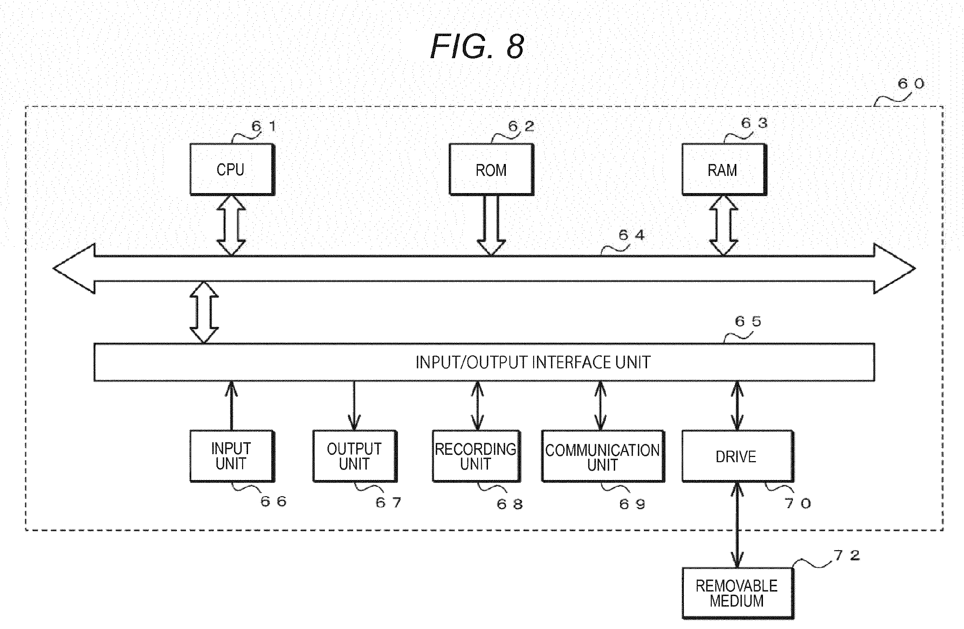

Fig. 8 is a diagram showing an example structure of a computer device that performs the above described series of operations in accordance with a program. A CPU (Central Processing Unit) 61 of a computer device 60 performs various kinds of operations in accordance with a computer program recorded on a ROM (Read Only Memory) 62 or a recording unit 68.

Computer programs to be executed by the CPU 61 and data are stored in a RAM (Random Access Memory) 63 as appropriate. The CPU 61, the ROM 62, and the RAM 63 are connected to one another by a bus 64.

An input/output interface 65 is also connected to the CPU 61 via the bus 64. An input unit 66 such as a touch panel, a keyboard, a mouse, or a microphone, and an output unit 67 formed with a display or the like are connected to the input/output interface 65. The CPU 61 performs various kinds of operations in accordance with instructions input through the input unit 66. The CPU 61 also outputs operation results to the output unit 67.

The recording unit 68 connected to the input/output interface 65 is formed with a hard disk or a SSD (Solid State Drive), and records computer programs to be executed by the CPU 61 and various kinds of data. A communication unit 69 communicates with an external device via a wired or wireless communication medium such as a network like the Internet or a local area network, or digital broadcasting. The computer device 60 may also obtain a computer program via the communication unit 69, and record the computer program on the ROM 62 or the recording unit 68.

When a removable medium 72 that is a magnetic disk, an optical disk, a magnetooptical disk, a semiconductor memory, or the like is mounted, a drive 70 drives the removable medium 72, to obtain a recorded computer program and recorded data. The obtained computer program and data are transferred to the ROM 62, the RAM 63, or the recording unit 68, where necessary.

The CPU 61 reads and executes the computer program for performing the above described series of operations, and performs an encoding operation on the image data of multi-view images recorded on the recording unit 68 or the removable medium 72, or on the image data of multi-view images supplied via the communication unit 69.

It should be noted that the present invention should not be interpreted to be limited to the above described embodiments of the invention. For example, a multi-view image is not necessarily formed with the two images of a left-eye image and a right-eye image, but may be formed with images of three or more viewpoints. The embodiments of the invention disclose the present invention through examples, and it should be obvious that those skilled in the art can modify or replace those embodiments with other embodiments without departing from the scope of the invention. That is, the claims should be taken into account in understanding the subject matter of the invention.

INDUSTRIAL APPLICABILITY

In the image processing device and the image processing method of the present invention, a feature amount indicating the correlation between images of different viewpoints is generated. When the correlation is determined to be lower than a predetermined threshold value from the feature amount, the reference index assigned to a reference picture of a parallax prediction using the correlation between images of different viewpoints is re-assigned to a reference picture of a temporal prediction using the correlation between images in the temporal direction. Accordingly, the encoding efficiency in a case where the correlation between images of different viewpoints is low can be increased in multi-view image encoding. Thus, the present invention can be applied to imaging devices that generate and encode multi-view images, editing devices that edit and encode multi-view images, recording devices that encode multi-view images and record the encoded images on recording media, and the like.

REFERENCE SIGNS LIST

10 Encoding system, 11L Left-viewpoint image generating device, 11R Right-viewpoint image generating device, 20 Multi-view encoding device, 20bv, 20dv Image encoding device, 21 A/D conversion unit, 22 Picture rearrangement buffer, 23 Subtraction unit, 24 Orthogonal transform unit, 25 Quantization unit, 26 Lossless encoding unit, 27 Accumulation buffer, 28 Rate control unit, 31 Inverse quantization unit, 32 Inverse orthogonal transform unit, 33 Addition unit, 34 Deblocking filter, 35 Frame memory, 41 Feature amount generation unit, 45 Reference index assignment unit, 51 Intra prediction unit, 52 Motion/parallax prediction/compensation unit, 53 Predicted image/optimum mode select unit, 60 Computer device, 61 CPU (Central Processing Unit), 62 ROM (Read Only Memory), 63 RAM (Random Access Memory), 64 Bus, 65 Input/output interface, 66 Input unit, 67 Output unit, 68 Recording unit, 69 Communication unit, 70 Drive, 72 Removable medium

**Claims**

1. An image processing device comprising:

   a feature amount generation unit configured to generate a feature amount indicating a correlation between images of different viewpoints; and a reference index assignment unit configured to re-assign a reference index assigned to a reference picture of a parallax prediction using the correlation between the images of different viewpoints, to a reference picture of a temporal prediction using a correlation between images in a temporal direction, when the correlation between the images of different viewpoints is determined to be lower than a predetermined threshold value based on the feature amount generated by the feature amount generation unit.

2. The image processing device according to claim 1, wherein the feature amount generation unit generates the feature amount, based on an operation to encode a first picture in a GOP, and the reference index assignment unit performs the reference index assignment on a subsequent picture following the first picture in the GOP, based on the feature amount.

3. The image processing device according to claim 2, wherein, in the operation to encode the first picture in the GOP, the feature amount generation unit calculates the feature amount that is at least one of a total sum of differences between a block being encoded and a reference block in the image when a parallax vector is detected, a proportion of intra macroblocks in the image, and an image complexity ratio between the picture being encoded and a reference picture of a different viewpoint.

4. The image processing device according to claim 2, wherein, when the correlation is determined to be lower than the predetermined threshold value, the reference index assignment unit turns a non-reference picture into a reference picture in the GOP structure, the non-reference picture being closer in a temporal direction.

5. The image processing device according to claim 1, wherein the feature amount generation unit calculates the feature amount that is a total sum of differences between a block being encoded and a reference block in an image when a motion vector is detected through motion detection, and based on the feature amount, the reference index assignment unit performs the reference index assignment on a subsequent picture following the picture used in the calculation of the feature amount.

**6.** An image processing method comprising the steps of:

generating a feature amount indicating a correlation between images of different viewpoints; and

re-assigning a reference index assigned to a reference picture of a parallax prediction using the correlation between the images of different viewpoints, to a reference picture of a temporal prediction using a correlation between images in a temporal direction, when the correlation between the images of different viewpoints is determined to be lower than a predetermined threshold value based on the generated feature amount.

# FIG. 1

EP 2 566 167 A1

## FIG. 2

# FIG. 3

EP 2 566 167 A1

# *FIG. 4*

```
         ┌──────────┐
         │  START   │
         └────┬─────┘
              │
       ┌──────┴──────┐
       │ PICTURE TO  │
       │ BE ENCODED  │
       └──────┬──────┘
              │                          ST1
        ◇ IS IT              
  No ───◇ DEPENDENT ◇
        ◇ VIEW?    ◇
              │ Yes
              │                          ST2
        ◇ IS IT     ◇── No ──┐
        ◇ TOP OF GOP?◇        │
              │ Yes           │
```

ST9 — SAME ENCODING OPERATION AS CONVENTIONAL ONE

ST3 — ENCODING OPERATION

ST4 — GENERATE FEATURE AMOUNT

ST5 — DETERMINE REFERENCE INDEX ASSIGNMENT METHOD

ST6 — IS IT NECESSARY TO CHANGE ASSIGNMENT METHOD ? — No

ST7 — ISSUE RPLR COMMAND

ST8 — ENCODING OPERATION

PICTURE TO BE ENCODED

END

*FIG. 5*

CamO
(Base View)

I bv1  P bv2  P bv3  P bv4  P bv5

Cam1
(Dependent View)

P dv1  P dv2  P dv3  P dv4  P dv5

ref_idx=0

ref_idx=1

## FIG. 6

# FIG. 7

(A)

Cam0
(Base View)

| I bv1 | P bv2 | P bv3 | P bv4 | P bv5 |

LIST_0
ref_idx=1

LIST_0
ref_idx=0

LIST_1
ref_idx=0

Cam1
(Dependent View)

| P dv1 | B dv2 | P dv3 | B dv4 | P dv5 |

(B)

Cam0
(Base View)

| I bv1 | P bv2 | P bv3 | P bv4 | P bv5 |

LIST_0
ref_idx=0

LIST_1
ref_idx=0

Cam1
(Dependent View)

| P dv1 | P dv2 | P dv3 | B dv4 | P dv5 |

LIST_0
ref_idx=1

(C)

Cam0
(Base View)

| I bv1 | P bv2 | P bv3 | P bv4 | P bv5 |

LIST_0
ref_idx=0

LIST_1
ref_idx=0

Cam1
(Dependent View)

| P dv1 | B s dv2 | P dv3 | B dv4 | P dv5 |

LIST_0
ref_idx=1

## FIG. 8

CPU 61    ROM 62    RAM 63

64

INPUT/OUTPUT INTERFACE UNIT 65

INPUT UNIT 66    OUTPUT UNIT 67    RECORDING UNIT 68    COMMUNICATION UNIT 69    DRIVE 70

REMOVABLE MEDIUM 72

60

EP 2 566 167 A1

## INTERNATIONAL SEARCH REPORT

| International application No. |
|---|
| PCT/JP2011/065560 |

**A.   CLASSIFICATION OF SUBJECT MATTER**
*H04N13/02*(2006.01)i, *H04N7/32*(2006.01)i

According to International Patent Classification (IPC) or to both national classification and IPC

**B.   FIELDS SEARCHED**

Minimum documentation searched (classification system followed by classification symbols)
H04N13/02, H04N7/32

Documentation searched other than minimum documentation to the extent that such documents are included in the fields searched
Jitsuyo Shinan Koho         1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y<br>A | JP 2009-159465 A   (Victor Company of Japan, Ltd.),<br>16 July 2009 (16.07.2009),<br>paragraphs [0001] to [0024]; fig. 10<br>(Family: none) | 1-3,6<br>4,5 |
| Y<br>A | WO 2009/001791 A1   (Nippon Telegraph and Telephone Corp.),<br>31 December 2008 (31.12.2008),<br>paragraph [0053]<br>& US 2010/0189177 A1      & EP 2161937 A1 | 1-3,6<br>4,5 |
| Y<br>A | JP 2010-63092 A   (Panasonic Corp.),<br>18 March 2010 (18.03.2010),<br>paragraphs [0001] to [0017]<br>& US 2010/0033594 A1 | 1-3,6<br>4,5 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    28 September, 2011 (28.09.11) | Date of mailing of the international search report<br>    11 October, 2011 (11.10.11) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/065560

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-283253 A  (Sharp Corp.), 20 November 2008 (20.11.2008), paragraphs [0031] to [0032] (Family: none) | 2,3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010063092 A